# EUROPEAN PATENT SPECIFICATION

(11) **EP 2 169 913 B1**
(45) Date of publication and mention of the grant of the patent: **07.08.2013**
(21) Application number: 09170647.3
(22) Date of filing: 18.09.2009
(51) Int. Cl.: H04L 29/08, H04L 29/06, H04M 3/51, H04M 7/00

(54) **Method, apparatus, and system for coordinating voice and webpage transmission**
Verfahren, Vorrichtung und System zur Koordinierung von Sprach- und Webseitenübertragung
Procédé, appareil et système pour coordonner la transmission de la voix et d'une page Web

(30) Priority: 28.09.2008 CN 200810216620
(43) Date of publication of application: 31.03.2010
(73) Proprietor: Huawei Technologies Co., Ltd., Longgang District, Shenzhen Guangdong 518129 (CN)
(72) Inventor: Xu, Zhongqing, 518129, Shenzhen Guangdong (CN); Jin, Hongbo, 518129, Shenzhen Guangdong (CN); Wen, Changcheng, 518129, Shenzhen Guangdong (CN)
(74) Representative: Isarpatent

(56) References cited:
- WO-A1-99/00751
- US-A1- 2002 057 677
- US-A1- 2004 233 898
- US-A1- 2007 047 523

## Description

### Field of the Invention

The present invention relates to the communication field, and in particular, to a method, apparatus, and system for coordinating voice and webpage transmission during communications.

### Background of the Invention

Now, Web is a popular application of the Internet. Many applications of the Internet are deployed on the Web system. On the one hand, as the Internet is constantly extended and the Web technology becomes more and more mature, Web still remains one of mainstream Internet technologies in the foreseeable future. On the other hand, telephony is a rather mature technology and it is difficult to develop new telecom network services due to the features of telecom networks. The combination of Web and telephony, however, is still at an early stage and the combination mode is simple. With the gradual convergence of the telecom network and the Internet, the combination mode of telephony and Web becomes a hot research topic.

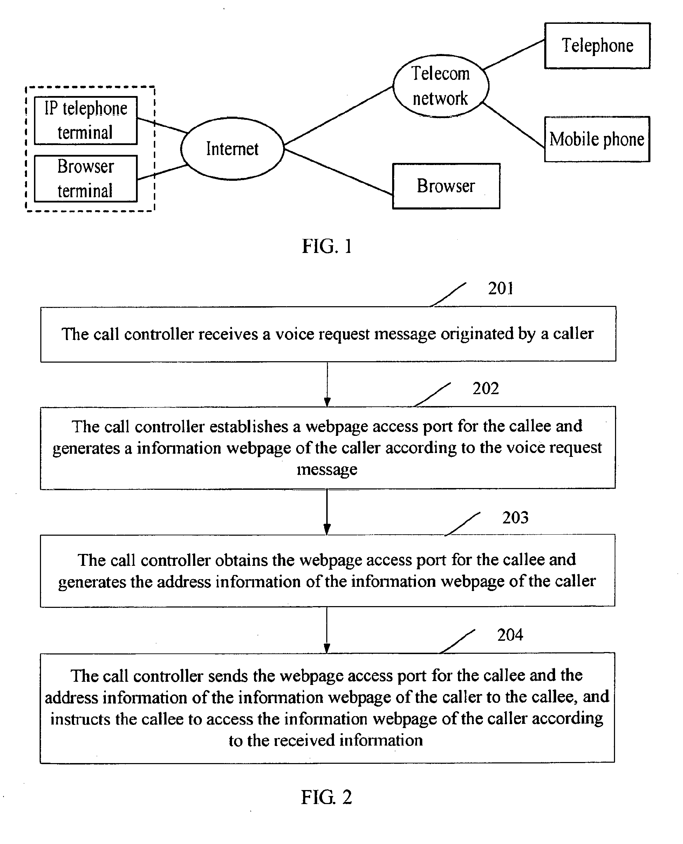

FIG. 1 shows a combination of a telecom network and the Internet in the prior art. In this combination mode, a user terminal must support the functions of a traditional Web browser and a Session Initiation Protocol, SIP, telephone terminal. A special telephone hyperlink is incorporated on an existing webpage, and the operations are as follows:
a browser terminal obtains a webpage;
a user clicks the telephone hyperlink on the webpage to send a request to a Web server;
the server identifies that the request sent by the user is a telephone voice request and sends a control message to a telecom network;
the telecom network establishes a voice connection for the caller and callee through control signaling.

During the implementation of the present invention, the inventor finds that the prior art has at least the following weaknesses: in the prior art, the voice in a telecom network is integrated to an existing Web system as a functional component. Whether users can make calls is decided by the contents on the webpage. For a specific service, users can only access the webpage that provides the service before knowing whether they can make calls and the telephone numbers they can dial. The telephone number may be a numerical string or a uniform resource identifier, URI,. In addition, for the services similar to remote network operation instructions, the two parties can only perform voice communications and the webpage currently accessed by a party is unknowable to the other party.
US2007/047523A1 discloses a method and system for providing a call set-up triggered push content to at least one receiving party via a first telecommunication network. The method includes performing a call control function in response to a call set-up from a calling party to a called party. The call control function operates on at least one call parameter. The method further includes applying application logic based upon the at least one call parameter for determining the at least one receiving party and the corresponding push content details of the at least one receiving party, and delivering the push content specified by the push content details to the at least one receiving party.

### Summary of the Invention

Embodiments of the present invention provide a method, apparatus, and system for coordinating voice and webpage transmission so that a channel for coordinating voice and webpage transmission may be establishing during communications.

A method for coordinating voice and webpage transmission includes:
receiving a voice request message originated by a caller;
establishing a voice communication between the caller and the callee; characterized by that the method further comprises:
   receiving a pushing request message for pushing a webpage from one of the caller and the callee during the conversation between the caller and the callee;
   generating the webpage according to the request message;
   obtaining a webpage access port for the other of the caller and the callee and generating address information of the webpage; and
   sending the webpage access port and the address information to the other of the caller and the callee" and instructing the other of the caller and the callee, to access the webpage according to the webpage access port and the address information.

An system for coordinating voice and webpage transmission includes:
call controller, configured to establish a voice communication between a caller terminal and a callee terminal; characterized by that the call controller is further configured to:
   receive a pushing request message for pushing a webpage from one of the caller and the callee terminal during the conversation between the caller and the callee;
   generate the webpage according to the request message;
   obtain a webpage access port for the other of the caller and the callee terminal and generating address information of the webpage; and
   send the webpage access port and the address information to the other of the caller and the callee terminal, and instruct the other of the caller and the callee terminal, to access the webpage according to the webpage access port and the address information.

Computer readable storage medium, comprising computer program codes which when executed by a computer processor cause the compute processor to execute the steps according to any one of the claims 1 to 7.

The caller terminal is configured to originate a voice request message to the call controller.

The call controller is configured to: establish a webpage access port for the callee and generate an information webpage of caller according to the voice request message and send the webpage access port for the callee and the address information of the information webpage of caller to the callee terminal.

The callee terminal is configured to: access the information webpage of caller according to the webpage access port for the callee and the address information of the information webpage of caller and establish a voice communication connection with the caller terminal.

In the embodiments of the present invention, voice and webpage channels are establish for communication parties; the server pushes a webpage to the callee; and the callee accesses the information webpage of caller so that the caller and callee may exchange webpage information during a conversation.

### Brief Description of the Drawings

To make the technical solution under the present invention or in the prior art clearer, the accompanying drawings for illustrating the embodiments of the present invention or illustrating the prior art are outlined below. Evidently, the accompanying drawings are exemplary only, and those skilled in the art may derive other drawings from such accompanying drawings without creative work.

FIG. 1 shows a combination between a telecom network and the Internet in the prior art;

FIG. 2 is a flowchart of a method for coordinating voice and webpage transmission in an embodiment of the present invention;

FIG. 3 is a supplementary flowchart of two-way transmission coordination in a method for coordinating voice and webpage transmission in an embodiment of the present invention;

FIG. 4 shows an application scenario of a method for coordinating voice and webpage transmission in an embodiment of the present invention;

FIG. 5 shows a structure of an apparatus for coordinating voice and webpage transmission in an embodiment of the present invention;

FIG. 6 shows another structure of an apparatus for coordinating voice and webpage transmission in an embodiment of the present invention; and

FIG. 7 shows a system for coordinating voice and webpage transmission in an embodiment of the present invention.

### Detailed Description of the invention

The technical solution of the present invention is hereinafter described in detail with reference to the accompanying drawings. It is evident that the embodiments are only exemplary embodiments of the present invention and the present invention is not limited to such embodiments. Other embodiments that those skilled in the art derive from the embodiment of the present invention also fall in the scope of protection of the present invention.

As shown in FIG. 2, a method for coordinating voice and webpage transmission in the first embodiment of the present invention includes the following blocks:

Block 201: A call controller receives a voice request message originated by a caller.

Block 202: The call controller establishes a webpage access port for a callee and generates an information webpage of caller according to the voice request message.

Block 203: The call controller obtains the webpage access port for the callee and generates the address information of the information webpage of caller.

Block 204: The call controller sends the webpage access port for the callee and the address information of the information webpage of caller to the callee, and instructs the callee to access the information webpage of caller according to the webpage access port for the callee and the address information of the information webpage of caller. Optionally, in this block, the call controller may add the webpage access port for the callee and the address information of the information webpage of caller to the voice request message originated by the caller, then send the voice request message to the callee, and instruct the callee to switch on the voice request from the caller. The process of instructing the callee to access the information webpage of caller according to the webpage access port for the callee and the address information of the information webpage of caller includes: instructing the webpage generator according to the voice request message to generate a webpage access port for the callee and an information webpage of caller for the callee terminal. The caller information may be any other message to be disclosed to the callee terminal and is not limited to the caller-related information.

In the first embodiment of the present invention, the call controller establishes voice and webpage channels for the communication parties and pushes a webpage to the callee, and the callee accesses the information webpage of caller so that the caller and callee may exchange webpage information during a conversation.

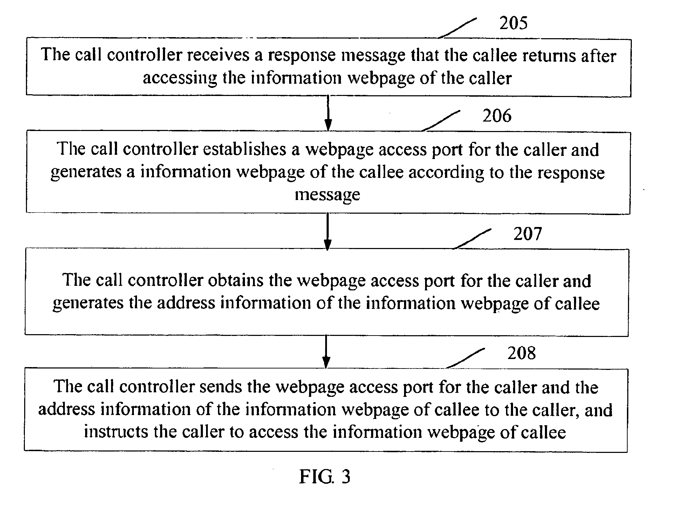

As shown in FIG. 3, after block 204, the method for coordinating two-way voice and webpage transmission may further include the following optional blocks:

Block 205: The call controller receives a response message that the callee returns after accessing the information webpage of caller.

Block 206: The call controller establishes a webpage access port for the caller and generates an information webpage of callee according to the response message. Optionally, the call controller may instruct the webpage generator to generate a webpage access port for the caller and an information webpage of callee for the caller terminal. The response message may also include a voice response request message returned to the caller by the callee according to the voice request message sent from the caller.

Block 207: The call controller obtains the webpage access port for the caller and generates the address information of the information webpage of callee.

Block 208: The call controller sends the webpage access port for the caller and the address information of the information webpage of callee to the caller, and instructs the caller to access the information webpage of callee according to the webpage access port for the caller and the address information of the information webpage of callee.

Optionally, if the response message includes the voice response request message returned to the caller by the callee according to the voice request message sent from the caller, the call controller may add the webpage access port for the caller and the address information of the information webpage of callee to the response message, send the response message to the caller, instruct the caller to receive the voice response request message sent from the callee, and then establish a voice communication link between the caller and the callee. In addition, during a conversation, the webpage access port for the caller and the webpage access port for the callee may not be changed. These ports may be established upon setup of the conversation and canceled upon end of the conversation.

Through blocks 204 to 208 in the first embodiment, the call controller pushes a webpage to the callee and the callee accesses the information webpage of caller; and the caller control pushes a webpage to the caller and the caller accesses the information webpage of callee. In this way, the two-way webpage transmission is coordinated when the call controller, caller, and callee are in a conversation.

In the embodiments of the present invention, a webpage channel is established when a voice connection is established. The voice request message originated by the caller may be a SIP message. In the embodiments of the present invention, the caller may realize webpage and voice communications with the callee through an extended SIP message (or other protocols, including but not limited to Integrated Services Digital Network User Part, ISUP) and SIP message exchange.

In the first embodiment of the present invention, webpage location information may be carried by an extended SIP body. In the SIP message, a Session Description Protocol, SDP, message is configured to negotiate between terminals. As the message body in the SIP message, the SDP message carries relevant information such as a media type acceptable to the two parties.

As shown below, an extended SDP protocol is used so that the SDP message may carry webpage location information.
INVITE sip:bob@shenzhen.com SIP/2.0
Via: SIP/2.0/UDP pc33.shanghai.com;branch=z9hG4bK776asdhds
Max-Forwards: 70
To: Bob <sip:bob@shenzhen.com>
From: Alice <sip:alice@shanghai.com>;tag=1928301774
Call-ID: a84b4c76e66710@pc33.shanghai.com
CSeq: 314159 INVITE
Contact: <sip:alice@pc33.shanghai.com>
Content-Type: application/sdp
Content-Length: 142
v=0
o=bob 515369 IN IP4 server1.juphoon.com
s=Let's Talk
t=0 0
c=IN IP4 192.168.0.100
m=audio 49170 RTP/AVP 0 3
ap=http://huawei.com/20080725
aa= AProfile

As shown in the preceding example of using extended SDP, the receiver of the SIP message may access the webpage whose location information is AProfile through the webpage port http://huawei.com/20080725. After receiving the SIP message, the receiver may access the webpage http://huawei.com/20080725/AProfile. In addition, the SIP message carries an "ap" parameter identifying the webpage port and an "aa" parameter identifying the webpage location information. In fact, any other names that do not conflict with the existing parameter names may be configured to the two parameters. For easy descriptions, the two parameters are named "ap" and "aa".

In the first embodiment of the present invention, SIP is extended and a conversation is established through a SIP Invite message. In addition, according to service requirements, the call controller may send a webpage notification message to the terminal through a SIP message and the terminal may send the webpage notification message to the opposite party through the call controller after the conversation is established and before the conversation ends.

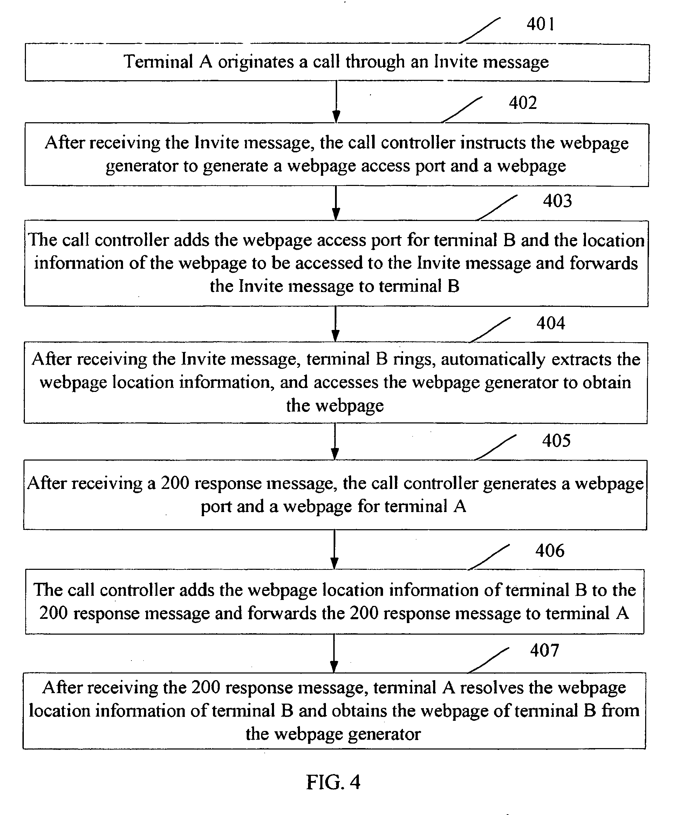

FIG. 4 shows the format of an Invite message during conversation establishment in a specific application scenario. In the Invite message, the telephone number of the caller (terminal A) is 28787524 and that of the callee (terminal B) is 28783248.

The process of establishing a conversation includes the following blocks:

Block 401: Terminal A originates a call through an Invite message. The message format is as follows:
INVITE sip: 28783248@huawei.com SIP/2.0
To: B <sip: 28783248@huawei.com>
From: A <sip:28787524@huawei.com>;tag=1928301774
Contact: <sip: 28787524@huawei.com>
....

Block 402: After receiving the Invite message, the call controller instructs the webpage generator to generate a webpage access port for terminal B (http://huawei.com/28783248_20080725) and an information webpage of caller for terminal B, the information webpage of caller for terminal B may be information of the caller. The information webpage of caller may be the information of the caller and the location information of the information webpage of caller is AProfile.

Block 403: The call controller adds the webpage access port for terminal B and the location information of the webpage to be accessed to the Invite message and forwards the Invite message to terminal B according to the webpage access port for terminal B. The format of the forwarded message is as follows:
INVITE sip:28783248@huawei.com SIP/2.0
To: B <sip: 28783248@huawei.com>
From: A <sip: 28787524@huawei.com>;tag=1928301774
Contact: <sip: 28787524@huawei.com>
...

ap=http://huawei.com/28783248_20080725
aa=AProfile
...

Block 404: After receiving the Invite message, terminal B rings. Then terminal B automatically extracts the location information of the information webpage of caller and accesses the webpage generator to obtain the webpage. Terminal B puts through the call and returns a 200 response message to the call controller. The 200 response message is as follows:
200 SIP/2.0
To: B <sip: 28783248@huawei.com>
From: A <sip: 28787524@huawei.com>;tag= 1928301774
Contact: <sip: 28783248@huawei.com>
...

Block 405: After receiving the 200 response message, the call controller generates a webpage port http://huawei.com/28787524_20080725 for terminal A and generates an information webpage of callee to be pushed to terminal A. The webpage may be the information of terminal B and the location information of the information webpage of callee is BProfile.

Block 406: The call controller adds the webpage location information of terminal B to the 200 response message and forwards the 200 response message to terminal A. The format of the forwarded message is as follows:
200 SIP/2.0
To: B <sip: 28783248@huawei.com>
From: A <sip: 28787524@huawei.com>;tag=1928301774
Contact: <sip: 28783248@huawei.com>
...

ap=http://huawei.com/28787524_20080725
aa=BProfile
...

Block 407: After receiving the 200 response message, terminal A parses the webpage location information of terminal B and obtains the webpage of terminal B from the webpage generator. Finally, terminal A sends an ACK message to terminal B. Up to now, the call is put through.

The call controller may be integrated with the webpage generator or may be deployed independently of the webpage generator.

The above is a conversation establishing process. After a conversation is established, certain services may require terminal A or terminal B to access other pages such as a webpage of an external terminal C. In this case, the call controller may send a webpage notification message of terminal C to terminal A or terminal B, or forward the webpage notification message sent from terminal C. For the webpage notification message after conversation establishing, the method such as MESSAGE or RFEER already defined in the SIP message or the method such as NOTIFYWEB defined by users may be configured to send webpage information between terminal A and terminal B.

To better describe the present invention, the second embodiment of the present invention uses a service scenario to detail the blocks of the present invention. The service scenario describes the process of booking air tickets by telephone. The method in the present invention may better solve the problems in typing the identity number and name.

A user dials a booking phone number to book an air ticket. After the terminal rings, the operator obtains the information of the user through the Web browser, including the Profile information, previous booking records, and credit level. At the same time, the operator answers the call.

After the call is put through, the user may see the webpage or advertisement that provides the information of the telephone booking company.

The user tells the operator about the booking requirements such as the port of departure, departure date, and airline company and determines the flight number after communicating and negotiating with the operator.

The telephone booking company pushes a webpage to the user so that the user may find an interface for typing personal information such as the name and identity number in the Web browser if the booking service provider does not have the personal information of the user.

The user types relevant information including the name, identity number, and address through the webpage and submits the typed information. The booking process is complete.

The call ends when the user or the operator hangs up the phone.

From the application viewpoint, the second embodiment of the present invention describes the whole process of booking an air ticket by telephone and the cooperation between various modules in the process.

A webpage channel is established between the user and the operator.
Terminal A (the caller) dials 114.
INVITE sip:114@huawei.com SIP/2.0
To: 114 <sip:114@huawei.com>
From: A <sip: 28787524@huawei.com>;tag=1928301774
Contact: <sip: 28787524@huawei.com>
...;

After receiving an Invite message, the call controller instructs the webpage generator to generate a webpage port http://huawei.com/114_20080725 and a webpage for the callee (114). The webpage may be the information of the caller (A) and its location information is AProfile.

The call controller adds the webpage port and the location information of the webpage to the SIP message as parameters and forwards the SIP message to terminal 114 (the operator).
INVITE sip:114@huawei.com SIP/2.0
To: 114 <sip:114@huawei.com>
From: A <sip: 28787524@huawei.com>;tag=1928301774
Contact: <sip: 28787524@huawei.com>
...

ap=http://huawei.com/114_20080725
aa=AProfile
...;

After receiving the Invite message, the terminal 114 rings and obtains the webpage providing the personal information (Profile) of the caller (A) from the webpage generator through the Web browser. The address information of the webpage is http://huawei.com/114_20080725/AProfile. The operator picks up the phone to put through the call and a SIP 200 message is returned to the call controller.
200 SIP/2.0
To: B <sip: 114@huawei.com>
From: A <sip: 28787524@huawei.com>;tag=1928301774
Contact: <sip:114@huawei.com>
...;

After receiving the SIP 200 message, the call controller instructs the webpage generator to generate a webpage port http://huawei.com/28787524_20080725 and a webpage of a booking service provider for the caller, adds the location information (info114) of the generated webpage to the SIP body, and forwards the SIP 200 message to terminal A.
200 SIP/2.0
To: B <sip: 114@huawei.com>
From: A <sip: 28787524@huawei.com>;tag=1928301774
Contact: <sip: 114@huawei.com>
...

ap=http://huawei.com/28787524_20080725
aa=info114
...;

Terminal A displays the booking webpage through the Web browser and sends an ACK message to terminal 114. Up to now, a conversation is established.

The call controller establishes voice and webpage channels between the user and the operator. The webpage access port for the user is http://huawei.com/28787524_20080725 and the webpage access port for the operator is http://huawei.com/114_20080725. During the conversation, the two parties must access the webpage through the specified ports. The webpage address is as follows: access port + webpage location information in the SIP message.

The following describes the process of the operator pushing the booking webpage to the user.

During the conversation, after determining the specific information of the ticket to be booked through voice communications, the operator (terminal 114) dials 1 to instruct the call controller to push the booking webpage to the user.
MESSAGE sip: 28787524@huawei.com SIP/2.0
To: A <sip: 28787524@huawei.com>
From: 114 <sip:114@huawei.com>;tag=1928301774
Contact: <sip:114@huawei.com>
...

aa= input
...;

The call controller sends a command for generating a booking webpage to the webpage generator. After generating a booking webpage, webpage generator A returns the webpage location information (input) to the call controller.

The call controller forwards the message carrying the webpage location information to the user.

The user obtains the booking webpage according to the webpage port and the webpage location information (httn://huawei.com/28787524 20080725/input) in the SIP message. The process of typing personal information is described as follows: The user submits personal information such as the name and identity number on the webpage. After receiving the personal information, the webpage generator writes it into the data exchange space.

The user sends a SIP signaling message for pushing a webpage to the service controller. The SIP signaling message carries the location (result) of the pushed webpage. The message contents are as follows:
MESSAGE sip: 114@huawei.com SIP/2.0
To: 114 <sip: 28787524@huawei.com>
From: 114 <sip: 114@huawei.com>;tag=1928301774
Contact: <sip: 28787524@huawei.com>
...

aa=result
...;

The service controller forwards the SIP signaling message to terminal 114 (the operator).

Terminal 114 (the operator) obtains the webpage (http://huawei.com/114_20080725/result) and returns a SIP 200 message.

The process of the user submitting personal information is complete.

In the second embodiment of the present invention, the voice and webpage access channels are established for the two parties at the same time during a call so that the user may access the webpage during a conversation. In addition, the third embodiment of the present invention uses a SIP control function to control webpage access. SIP telephone users inside the system may access webpages only when using services such as a booking service. The call controller controls the generation of the webpages accessed by SIP telephone users and sends webpage location information to users. Thus, the system exercises good control over SIP telephone users.

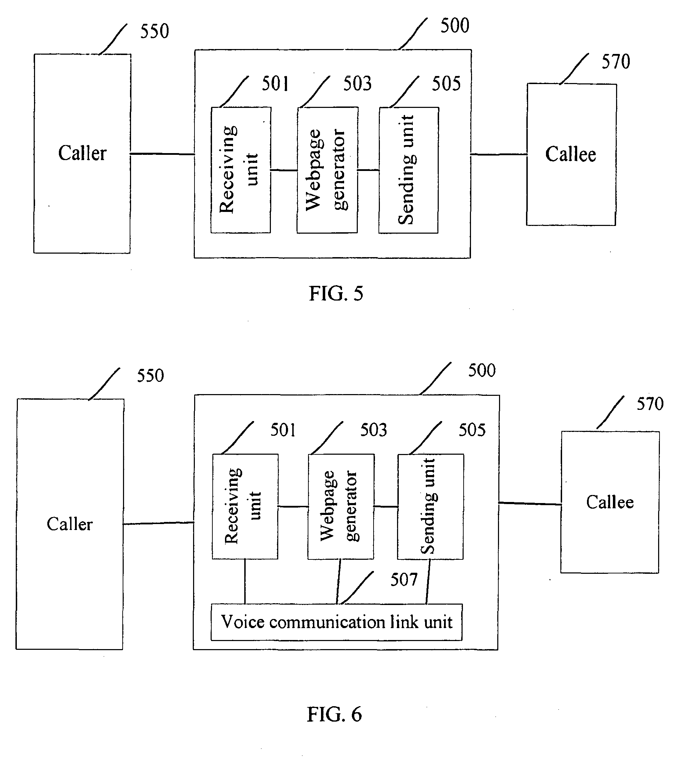

The third embodiment of the present invention provides an apparatus 500 for coordinating voice and webpage transmission (hereinafter referred to as the apparatus 500), which is used with a caller 550 and a callee 570. As shown in FIG.5, the apparatus 500 includes: a receiving unit 501, a webpage generator 503, and a sending unit 505.
a receiving unit 501 is configured to receive a voice request message originated by a caller;
a webpage generator 503 is connected to the receiving unit 501 and configured to: establish a webpage access port for the callee and generate an information webpage of caller according to the voice request message; and
a sending unit 505 is connected to the webpage generator 503 and configured to: obtain the webpage access port for the callee and address information of the information webpage of caller, which are generated by the webpage generator 503, and send the address information of the information webpage of caller to the callee 570 according to the webpage access port for the callee.

In the embodiments of the present invention, voice and webpage channels are established between two parties (the caller 550 and the callee 570), the server (the apparatus 500 in this embodiment) pushes a webpage to the callee, and the callee accesses the information webpage of caller so that the caller and callee may exchange webpage information during a conversation.

The apparatus 500 may be connected to the caller 550 and the callee 570 in a wired or wireless way.

Optionally, the webpage generator 503 may be further configured to receive the webpage access port for the callee from a communication device other than the apparatus for coordinating voice and webpage transmission and to generate the address information of the information webpage of caller.

The receiving unit 501 is further configured to receive the response message that the callee returns after accessing the information webpage of caller; the webpage generator 503 establishes a webpage access port for the caller and generates a information webpage of callee according to the response message, and generates the address information of the information webpage of callee; and the sending unit 505 sends the webpage access port for the caller and the address information of the information webpage of callee to the caller 550, and instructs the caller 550 to access the information webpage of callee according to the webpage access port for the caller and the address information of the information webpage of callee.

The response message also includes the voice response request message returned to the caller by the callee according to the voice request message of the caller. The webpage generator 503 is further configured to add the webpage access port for the caller and the address information of the information webpage of callee to the response message; and the sending unit 505 sends the response message to the caller 550, and instructs the caller 550 to receive the voice response message sent from the callee.

Optionally, as shown in FIG. 6, the apparatus 500 also includes a voice communication link unit 507. The voice communication link unit 507 is configured to establish a voice communication link between the caller and the callee after the sending unit instructing the caller to receive the voice response request message sent from the callee.

Specifically, in the webpage transmission coordination system used by the apparatus 500, the caller 550 and the callee 570 may be handheld terminals such as mobile phones; and the apparatus 500 may be a call controller.

The caller terminal is configured to send a voice request message to the apparatus 500.

The apparatus 500 is configured to: establish a webpage access port for the callee and generate a information webpage of caller according to the voice request message and send the webpage access port for the callee and the address information of the information webpage of caller to the callee terminal.

The callee terminal is configured to: access the information webpage of caller according to the webpage access port for the callee and the address information of the information webpage of caller and establish a voice communication connection with the caller terminal.

After the callee terminal accesses the information webpage of caller according to the webpage access port for the callee and the address information of the information webpage of caller, the apparatus 500 receives a response message that the callee returns after accessing the information webpage of caller; establishes a webpage access port for the caller and generates a information webpage of callee according to the response message; obtains the webpage access port for the caller and generates the address information of the information webpage of callee; and sends the address information of the information webpage of callee to the caller according to the webpage access port for the caller, to instruct the caller to access the information webpage of callee according to the webpage access port for the caller and the address information of the information webpage of callee.

The response message may also include the voice response request message returned to the caller by the callee according to the voice request message sent from the caller.

The webpage generator may be further configured to receive the webpage access port for the callee from a communication device other than the apparatus for coordinating voice and webpage transmission and to generate the address information of the information webpage of caller.

Optionally, the apparatus 500 may further include a receiving unit, a webpage generator, and a sending unit. The receiving unit is configured to receive a response message that the callee returns after accessing the information webpage of caller. The webpage generator is configured to: establish a webpage access port for the caller and generate an information webpage of callee according to the response message and generate the address information of the information webpage of callee. The sending unit is configured to send the webpage access port for the caller and the address information of the information webpage of callee to the caller, and instruct the caller to access the information webpage of callee according to the received information.

Optionally, the response message also includes the voice response request message returned to the caller by the callee according to the voice request message sent from the caller. The webpage generator is further configured to add the webpage access port for the caller and the address information of the information webpage of callee to the response message; and the sending unit sends the response message to the caller to instruct the caller to receive the voice response message sent from the callee.

Optionally, this embodiment also provides a voice communication link unit. The voice communication link unit is configured to establish a voice communication link between the caller and the callee after the sending unit instructs the caller to receive the voice response message sent from the callee.

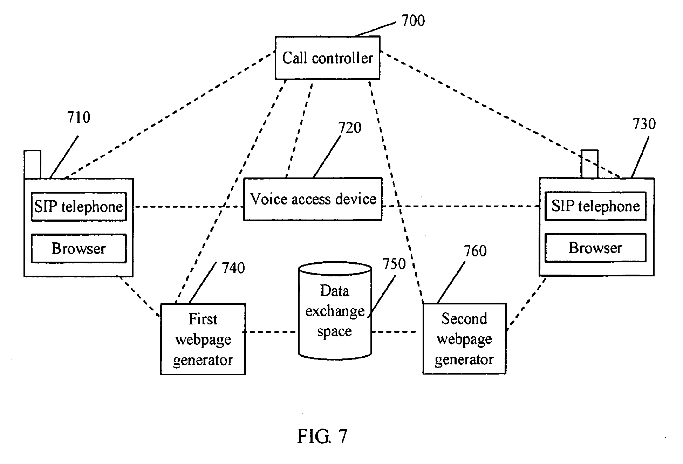

The fourth embodiment of the present invention provides a system for coordinating voice and webpage transmission. As shown in FIG. 7, the system includes a caller terminal 710, a callee terminal 730, a voice access device 720 for establishing a voice connection between the caller terminal 710 and the callee terminal 730, a call controller 700 for controlling the setup of a voice and webpage transmission path between the caller terminal 710 and the callee terminal 730, a first webpage generator 740 and a second webpage generator 760 for generating a webpage for terminal access under the control of the call controller 700, and a data exchange space 750 for exchanging data between the first webpage generator 740 and the second webpage generator 760.

The caller terminal 710 is configured to originate a voice request message to the call controller 700. The voice request message may be the Invite message in the first embodiment.

According to the voice request message, the call controller 700 instructs the second webpage generator 760 to establish a webpage access port for the callee and to generate a information webpage of the caller terminal 710, and requests the second webpage generator 760 to return the webpage access port for the callee and the address information of information webpage of the caller terminal 710. The call controller 700 obtains the webpage access port for the callee and the address information of information webpage of the caller terminal 710, and sends the webpage access port for the callee and the address information of information webpage of the caller terminal 710 to the callee terminal 730.

The callee terminal 730 accesses the information webpage of the caller terminal 710 according to the webpage access port for the callee and the address information of the address information of information webpage of the caller terminal 710 and returns a response message to the call controller 700.

The call controller 700 receives the response message that the callee returns after accessing the information webpage of caller and instructs the first webpage generator 740 according to the response message to generate a webpage access port for the caller and an information webpage of callee. After receiving the webpage access port for the caller and the address information of the information webpage of callee from the first webpage generator 740, the call controller 700 sends the received information to the caller terminal 710 to instruct the caller terminal 710 to access the information webpage of callee according to the received information.

After obtaining the information webpage of callee, the caller terminal 710 sends an ACK message to the callee terminal 730 and further establishes a system for coordinating voice and webpage transmission through the voice access device 720.

The caller terminal 710 and the callee terminal 730 may be connected in a direct and wireless way instead of through the voice access device 720.

The response message may also include the voice response request message returned to the caller by the callee according to the voice request message sent from the caller.

The webpage generator may be further configured to receive the webpage access port for the callee from a communication device other than the apparatus for coordinating voice and webpage transmission to generate the webpage access port for the callee and the address information of the information webpage of caller.

Optionally, the callee terminal 730 is configured to access the information webpage of the caller terminal 710 according to the webpage access port for the callee and the address information of the information webpage of the caller terminal 710 and may establish a system for coordinating voice and webpage transmission directly through the voice access device 720 after returning a response message to the call controller 700.

Optionally, the first webpage generator is on the second webpage generator. The second webpage generator is further configured to receive the webpage access port for the callee from a communication device other than the apparatus for coordinating voice and webpage transmission or from a third-party terminal and further configured to generate the address information of the information webpage of caller.

Optionally, the response message may also include the voice response request message returned to the caller by the callee according to the voice request message sent from the caller to establish a two-way transmission path in coordinated voice and webpage transmission.

Optionally, this embodiment provides a voice communication link unit. The voice communication link unit is configured to establish a voice communication link between the caller and the callee after the sending unit instructs the caller to receive the voice response request message sent from the callee.

In the third embodiment, the caller terminal 710 and the callee terminal 730 are terminals of the same type. The terminals of this type are configured to provide operation interfaces and input and output interfaces for users. Each terminal of this type includes at least a SIP telephone and a webpage browser. The SIP telephone is a user terminal supporting SIP. In addition, the SIP telephone supports the extended SIP body SDP in the present invention to carry the webpage location information. If the SIP body carries the webpage location information, the user terminal extracts the webpage location information and sends the information to the webpage browser. The webpage browser accesses the webpage location information specified in the SIP message. In addition, the webpage browser may automatically access the webpage generator (the first webpage generator 740 or the second webpage generator 760), obtain the webpage through the Hypertext Transfer Protocol, HTTP, render the obtained webpage into a visual graphic interface, and provide the visual graphic interface for users. The terminals of this type may use a webpage to access hyperlinks through HTTP GET and submit data through HTTP POST. Finally, the terminal pushes the webpage to other user terminals through a SIP message as required.

The call controller 700 is mainly configured to implement the control function by forwarding the SIP message. In addition, the call controller 700 instructs the second webpage generator 760 to generate a webpage according to the SIP message sent from the caller terminal 710, adds the webpage location information returned from the second webpage generator 760 to the SIP message in a method described in the first or second embodiment, and then forwards the SIP message through the call controller 700.

The first webpage generator 740 or the second webpage generator 760 is of this type. The webpage generator receives a webpage generation command from the call controller 700. The webpage generation command includes the following parameters: service type, service ID, sender ID, receiver ID, and current block information. After generating a webpage according to these parameters, the webpage generator returns webpage location information to the call controller 700.

In addition, the first webpage generator 740 or the second webpage generator 760 needs to read data from or write data into the data exchange space 750.

The data exchange space is configured to save webpage-related service data of two or more parties during a conversation and to provide the functions of creating, deleting, reading, and writing a data unit. The service data may be submitted by users through Web or may be configured to dynamically generate webpages to be pushed to terminals.

According to the first, second, and third embodiments, in the technical solution of the present invention, establishing voice and webpage channels for two parties at the same time may enable users to perform webpage communications during a conversation; the server pushes webpages to SIP telephone users by carrying webpage location information in a SIP message and SIP telephone users access relevant service webpages; and the Web access may be controlled through SIP. In this system, the webpage is temporarily generated by the webpage generator and the webpage access points are notified to the user terminals by the controller through SIP. In this way, the user terminals may access only the webpages specified in the controller.

Thus, the voice and webpage access channels are established for the two parties at the same time during a call so that the users may access the webpage during a conversation. The SIP control function is configured to control webpage access. The SIP telephone users inside the system may access webpages only when using services such as a booking service. The call controller controls the generation of the webpages accessed by SIP telephone users and sends webpage location information to users. Thus, the system exercises good control over SIP telephone users.

In the present invention, the extended SIP body SDP is used. To realize the functions described in the present invention, the SIP header may be extended or the SIP header and SDP may be extended at the same time. For example, the extended SDP is configured to send webpage port information and the extended SIP header is configured to send webpage location information. In addition to SIP, other protocols (including but not limited to ISUP) may be configured to implement the present invention.

Those skilled in the art may understand that all or part of the blocks in the preceding embodiments may be completed by hardware following instructions of a program. The program may be stored in a computer-readable storage medium such as a magnetic disk, a compact disk, a read-only memory, ROM, or a random access memory (RAM). When the program is executed, the blocks of the foregoing embodiments are executed.

Although the present invention has been described through some embodiments, those skilled in the art may make various modifications and variations to the present invention without departing from the scope of the present invention, as defined by the appended claims.

## Claims

1. A method for coordinating voice and webpage transmission, the method performed by a call controller and comprising:
receiving a voice request message originated by a caller;
establishing a voice communication between the caller and the callee;
**characterized by** that the method further comprises:
receiving a pushing request message for pushing a webpage from one of the caller and the callee during the conversation between the caller and the callee;
generating the webpage according to the request message;
obtaining a webpage access port for the other of the caller and the callee and generating address information of the webpage; and
sending the webpage access port and the address information to the other of the caller and the callee" and instructing the other of the caller and the callee, to access the webpage according to the webpage access port and the address information.

2. The method of claim 1, wherein the process of establishing a voice communication between the caller and the callee comprises:
establishing a webpage access port for a callee and generating an information webpage of a caller according to the voice request message;
obtaining the webpage access port for the callee and generating address information of the information webpage of the caller; and
adding the webpage access port for the callee and the address information of the information webpage of the caller to the voice request message originated by the caller, sending the voice request message to the callee, and instructing the callee to put through the voice request of the caller and to access the information webpage of the caller according to the webpage access port for the callee and the address information of the information webpage of the caller.

3. The method of claim 2, wherein the establishing a webpage access port for a callee and generating an information webpage of a caller according to the voice request message further comprises:
instructing a webpage generator to generate a webpage access port for the callee and the information webpage of the caller for a callee terminal.

4. The method of claim 2, wherein after instructing the callee to access the information webpage of the caller according to the webpage access port for the callee and the address information of the information webpage of the caller, the process of establishing a voice communication between the caller and the callee further comprises:
receiving a response message returned by the callee after accessing the information webpage of the caller;
establishing a webpage access port for the caller and generating an information webpage of the callee;
obtaining the webpage access port for the caller and generating address information of the information webpage of the callee;
adding the webpage access port for the caller and the address information of the information webpage of the callee to the response message, sending the response message to the caller, and instructing the caller to receive the response message sent from the callee and to access the information webpage of the callee according to the webpage access port for the caller and the address information of the information webpage of the callee.

5. The method of claim 4, wherein the establishing a webpage access port for the caller and generating an information webpage of the callee comprises:
instructing the webpage generator to generate the webpage access port for the caller and the information webpage of the callee for the caller.

6. The method of claim 5, wherein after instructing the caller to receive the voice response request message sent from the callee, the process of establishing a voice communication between the caller and the callee further comprises:
establishing a voice communication connection between the caller and the callee.

7. The method of claim 1, wherein the voice request message and the pushing request message are SIP extended messages; and the webpage access port and the address information are carried in a SIP message.

8. A system for coordinating voice and webpage transmission, comprising a call controller, configured to establish a voice communication between a caller terminal and a callee terminal; **characterized by** that the call controller is further configured to:
receive a pushing request message for pushing a webpage from one of the caller and the callee terminal during the conversation between the caller and the callee;
generate the webpage according to the request message;
obtain a webpage access port for the other of the caller and the callee terminal and generating address information of the webpage; and
send the webpage access port and the address information to the other of the caller and the callee terminal, and instruct the other of the caller and the callee terminal, to access the webpage according to the webpage access port and the address information.

9. The system of claim 8, wherein the call controller comprises:
a receiving unit, configured to receive a voice request message originated by a caller;
a webpage generator, connected to the receiving unit, and configured to establish a webpage access port for a callee and to generate an information webpage of the caller; and
a sending unit, connected to the webpage generator, and configured to obtain the webpage access port for the callee and address information of the information webpage of the caller generated by the webpage generator, and sending the webpage access port for the callee and address information of the information webpage of the caller to the callee.

10. The system of claim 9, wherein the webpage generator is further configured to receive a webpage access port for the callee from a communication device other than apparatus for coordinating voice and webpage transmission, and to generate the address information of the information webpage of the caller.

11. The system of claim 9, wherein
the receiving unit is further configured to receive a response message that the callee returns after accessing the information webpage of the caller;
the webpage generator is further configured to establish a webpage access port for the caller, generate an information webpage of the callee according to the response message, and generate address information of the information webpage of the callee; and
the sending unit is further configured to send the webpage access port for the caller and address information of the information webpage of the callee to the caller, and instruct the caller to access the information webpage of the callee according to the webpage access port for the caller and address information of the information webpage of the callee.

12. The system of claim 11, wherein the response message comprises a voice
response request message returned to the caller by the callee according to the voice request message sent from the caller,
the webpage generator is further configured to add the webpage access port for the caller and address information of the information webpage of the callee to the response message; and
the sending unit is further configured to send the response message to the caller, and instruct the caller to receive the voice response request message sent from the callee.

13. The system of claim 9, wherein the call controller further comprising:
a voice communication link unit, configured to establish a voice communication link between the caller and callee after the sending unit instructing the caller to receive the voice response request message.

14. The system of claim 8, further comprising:
a voice access device, configured to establish a voice communication connection between the caller terminal and callee terminal.

15. Computer readable storage medium, comprising computer program codes which when executed by a computer processor cause the compute processor to execute the steps according to any one of the claims 1 to 7.

## Patentansprüche

1. Verfahren zum Koordinieren von Sprach- und Webseiten-Übertragung, wobei das Verfahren durch eine Anruf-Steuereinrichtung ausgeführt wird und Folgendes umfasst:
Empfangen einer durch einen Anrufer erzeugten Sprachanforderungsnachricht;
Aufbauen einer Sprachkommunikation zwischen dem Anrufer und dem Angerufenen; **dadurch gekennzeichnet, dass** das Verfahren ferner Folgendes umfasst:
Empfangen einer Schubanforderungsnachricht zum Schieben einer Webseite entweder von dem Anrufer oder von dem Angerufenen während des Gesprächs zwischen dem Anrufer und dem Angerufenen;
Erzeugen der Webseite in Übereinstimmung mit der Anforderungsnachricht;
Erhalten eines Webseiten-Zugriffs-Ports für den anderen des Anrufers und des Angerufenen und Erzeugen der Adresseninformationen der Webseite; und
Senden des Webseiten-Zugriffs-Ports und der Adresseninformationen an den anderen des Anrufers und des Angerufenen und Anweisen des anderen des Anrufers und des Angerufenen in Übereinstimmung mit dem Webseiten-Zugriffs-Port und den Adresseninformationen, auf die Webseite zuzugreifen.

2. Verfahren nach Anspruch 1, wobei der Prozess des Aufbauens einer Sprachkommunikation zwischen dem Anrufer und dem Angerufenen Folgendes umfasst:
Aufbauen eines Webseiten-Zugriffs-Ports für einen Angerufenen und Erzeugen einer Informations-Webseite eines Anrufers in Übereinstimmung mit der Sprachanforderungsnachricht;
Erhalten des Webseiten-Zugriffs-Ports für den Angerufenen und Erzeugen der Adresseninformationen der Informations-Webseite des Anrufers; und
Hinzufügen des Webseiten-Zugriffs-Ports für den Angerufenen und der Adresseninformationen der Informations-Webseite des Anrufers zu der durch den Anrufer erzeugten Sprachanforderungsnachricht, Senden der Sprachanforderungsnachricht an den Angerufenen und Anweisen des Angerufenen,
die Sprachanforderung des Anrufers durchzustellen und in Übereinstimmung mit dem Webseiten-Zugriffs-Port für den Angerufenen und den Adresseninformationen der Informations-Webseite des Anrufers auf die Informations-Webseite des Anrufers zuzugreifen.

3. Verfahren nach Anspruch 2, wobei das Aufbauen eines Webseiten-Zugriffs-Ports für einen Angerufenen und das Erzeugen einer Informations-Webseite eines Anrufers in Übereinstimmung mit der Sprachanforderungsnachricht ferner Folgendes umfasst:
Anweisen eines Webseiten-Generators, einen Webseiten-Zugriffs-Port für den Angerufenen und die Informations-Webseite des Anrufers für ein Endgerät des Angerufenen zu erzeugen.

4. Verfahren nach Anspruch 2, wobei nach dem Anweisen des Angerufenen, in Übereinstimmung mit dem Webseiten-Zugriffs-Port für den Angerufenen und den Adresseninformationen der Informations-Webseite des Anrufers auf die Informations-Webseite des Anrufers zuzugreifen, der Prozess des Aufbauens einer Sprachkommunikation zwischen dem Anrufer und dem Angerufenen ferner Folgendes umfasst:
Empfangen einer durch den Angerufenen nach dem Zugreifen auf die Informations-Webseite des Anrufers zurückgeschickten Antwortnachricht;
Aufbauen eines Webseiten-Zugriffs-Ports für den Anrufer und Erzeugen einer Informations-Webseite des Angerufenen;
Erhalten des Webseiten-Zugriffs-Ports für den Anrufer und Erzeugen der Adresseninformationen der Informations-Webseite des Angerufenen;
Hinzufügen des Webseiten-Zugriffs-Ports für den Anrufer und der Adresseninformationen der Informations-Webseite des Angerufenen zu der Antwortnachricht, Senden der Antwortnachricht an den Anrufer und Anweisen des Anrufers, die von dem Angerufenen gesendete Antwortnachricht zu empfangen und
in Übereinstimmung mit dem Webseiten-Zugriffs-Port für den Anrufer und den Adresseninformationen der Informations-Webseite des Angerufenen auf die Informations-Webseite des Angerufenen zuzugreifen.

5. Verfahren nach Anspruch 4, wobei das Aufbauen eines Webseiten-Zugriffs-Ports für den Anrufer und das Erzeugen einer Informations-Webseite des Angerufenen Folgendes umfasst:
Anweisen des Webseiten-Generators, den Webseiten-Zugriffs-Port für den Anrufer und die Informations-Webseite des Angerufenen für den Anrufer zu erzeugen.

6. Verfahren nach Anspruch 5, wobei nach dem Anweisen des Anrufers, die von dem Angerufenen gesendete Sprachantwort-Anforderungsnachricht zu empfangen, der Prozess des Aufbauens einer Sprachkommunikation zwischen dem Anrufer und dem Angerufenen ferner Folgendes umfasst:
Aufbauen einer Sprachkommunikationsverbindung zwischen dem Anrufer und dem Angerufenen.

7. Verfahren nach Anspruch 1, wobei die Sprachanforderungsnachricht und die Schubanforderungsnachricht erweiterte SIP-Nachrichten sind; und der Webseiten-Zugriffs-Port und die Adresseninformationen in einer SIP-Nachricht geführt werden.

8. System zum Koordinieren der Sprach- und Webseiten-Übertragung, das eine Anruf-Steuereinrichtung umfasst, die konfiguriert ist, eine Sprachkommunikation zwischen einem Endgerät eines Anrufers und einem Endgerät eines Angerufenen aufzubauen; **dadurch gekennzeichnet, dass** die Anruf-Steuereinrichtung ferner konfiguriert ist:
eine Schubanforderungsnachricht zum Schieben einer Webseite entweder von dem Endgerät des Anrufers oder von dem Endgerät des Angerufenen während des Gesprächs zwischen dem Anrufer und dem Angerufenen zu empfangen;
die Webseite in Übereinstimmung mit der Anforderungsnachricht zu erzeugen;
einen Webseiten-Zugriffs-Port von dem anderen des Endgeräts des Anrufers und des Endgeräts des Angerufenen zu erhalten und die Adresseninformationen der Webseite zu erzeugen; und
den Webseiten-Zugriffs-Port und die Adresseninformationen an das andere des Endgeräts des Anrufers und des Endgeräts des Angerufenen zu senden und das andere des Endgeräts des Anrufers und des Endgeräts des Angerufenen anzuweisen,
in Übereinstimmung mit dem Webseiten-Zugriffs-Port und den Adresseninformationen auf die Webseite zuzugreifen.

9. System nach Anspruch 8, wobei die Anruf-Steuereinrichtung Folgendes umfasst:
eine Empfangseinheit, die konfiguriert ist, eine durch einen Anrufer erzeugte Sprachanforderungsnachricht zu empfangen;
einen Webseiten-Generator, der mit der Empfangseinheit verbunden ist und konfiguriert ist, einen Webseiten-Zugriffs-Port für einen Angerufenen aufzubauen und eine Informations-Webseite des Anrufers zu erzeugen; und
eine Sendeeinheit, die mit dem Webseiten-Generator verbunden ist und konfiguriert ist, den durch den Webseiten-Generator erzeugten Webseiten-Zugriffs-Port für den Angerufenen und die durch den Webseiten-Generator erzeugten Adresseninformationen der Informations-Webseite des Anrufers zu erhalten und den Webseiten-Zugriffs-Port für den Angerufenen und die Adresseninformationen der Informations-Webseite des Anrufers an den Angerufenen zu senden.

10. System nach Anspruch 9, wobei der Webseiten-Generator ferner konfiguriert ist, einen Webseiten-Zugriffs-Port für den Angerufenen von einer Kommunikationsvorrichtung mit Ausnahme der Vorrichtung zum Koordinieren der Sprach- und Webseiten-Übertragung zu empfangen und die Adresseninformationen der Informations-Webseite des Anrufers zu erzeugen.

11. System nach Anspruch 9, wobei
die Empfangseinheit ferner konfiguriert ist, eine Antwortnachricht zu empfangen, die der Angerufene nach dem Zugreifen auf die Informations-Webseite des Anrufers zurückschickt;
der Webseiten-Generator ferner konfiguriert ist, einen Webseiten-Zugriffs-Port für den Anrufer aufzubauen, eine Informations-Webseite des Angerufenen in Übereinstimmung mit der Antwortnachricht zu erzeugen und Adresseninformationen der Informations-Webseite des Angerufenen zu erzeugen; und
die Sendeeinheit ferner konfiguriert ist, den Webseiten-Zugriffs-Port für den Anrufer und Adresseninformationen der Informations-Webseite des Angerufenen an den Anrufer zu senden und den Anrufer anzuweisen, in Übereinstimmung mit dem Webseiten-Zugriffs-Port für den Anrufer und den Adresseninformationen der Informations-Webseite des Angerufenen auf die Informations-Webseite des Angerufenen zuzugreifen.

12. System nach Anspruch 11, wobei die Antwortnachricht eine durch den Angerufenen in Übereinstimmung mit der von dem Anrufer gesendeten Sprachanforderungsnachricht an den Anrufer zurückgeschickte Sprachantwort-Anforderungsnachricht umfasst,
wobei der Webseiten-Generator ferner konfiguriert ist, den Webseiten-Zugriffs-Port für den Anrufer und die Adresseninformationen der Informations-Webseite des Angerufenen zu der Antwortnachricht hinzuzufügen; und
die Sendeeinheit ferner konfiguriert ist, die Antwortnachricht an den Anrufer zu senden und den Anrufer anzuweisen, die von dem Angerufenen gesendete Sprachantwort-Anforderungsnachricht zu empfangen.

13. System nach Anspruch 9, wobei die Anruf-Steuereinrichtung ferner Folgendes umfasst:
eine Sprachkommunikations-Verbindungseinheit, die konfiguriert ist, eine Sprachkommunikationsverbindung zwischen dem Anrufer und dem Angerufenen aufzubauen, nachdem die Sendeeinheit den Anrufer angewiesen hat, die Sprachantwort-Anforderungsnachricht zu empfangen.

14. System nach Anspruch 8, das ferner Folgendes umfasst:
eine Sprachzugriffsvorrichtung, die konfiguriert ist, eine Sprachkommunikationsverbindung zwischen dem Endgerät des Anrufers und dem Endgerät des Angerufenen aufzubauen.

15. Computerlesbares Speichermedium, das Computerprogrammcodes umfasst, die, wenn sie durch einen Computerprozessor ausgeführt werden, den Computerprozessor veranlassen, die Schritte nach einem der Ansprüche 1 bis 7 auszuführen.

## Revendications

1. Procédé pour coordonner la transmission de la voix et d'une page Web, le procédé étant mis en oeuvre par une unité de commande d'appel et comprenant les étapes consistant à :
recevoir un message de demande de communication vocale en provenance d'un appelant ;
établir une communication vocale entre l'appelant et l'appelé ;
le procédé étant **caractérisé en ce qu'**il comprend en outre les étapes consistant à :
recevoir un message de demande de poussée pour pousser une page Web depuis un correspondant parmi l'appelant et l'appelé au cours de la conversion entre l'appelant et l'appelé ;
générer la page Web en accord avec le message de demande ;
obtenir un port d'accès de page Web pour l'autre correspondant parmi l'appelant et l'appelé et générer des informations d'adresse relatives à la page Web ; et
envoyer le port d'accès de page Web et les informations d'adresse à l'autre correspondant parmi l'appelant et l'appelé, et donner à l'autre correspondant parmi l'appelant et l'appelé l'instruction d'accéder à la page Web en accord avec le port d'accès de page Web et les informations d'adresse.

2. Procédé selon la revendication 1, dans lequel l'étape consistant à établir une communication vocale entre l'appelant et l'appelé comprend les étapes consistant à :
établir un port d'accès de page Web pour un appelé et générer une page Web d'informations relative à un appelant en accord avec le message de demande de communication vocale ;
obtenir le port d'accès de page Web pour l'appelé et générer des informations d'adresse relatives à la page Web d'informations relative à l'appelant ; et
ajouter au message de demande de communication vocale en provenance de l'appelant le port d'accès de page Web pour l'appelé et les informations d'adresse relatives à la page Web d'informations relative à l'appelant, envoyer le message de demande de communication vocale à l'appelé, et donner à l'appelé l'instruction de donner suite à la demande de communication vocale de l'appelant et d'accéder à la page Web d'informations relative à l'appelant en accord avec le port d'accès de page Web pour l'appelé et les informations d'adresse relatives à la page Web d'informations relative à l'appelant.

3. Procédé selon la revendication 2, dans lequel l'étape consistant à établir un port d'accès de page Web pour un appelé et générer une page Web d'informations relative à un appelant en accord avec le message de demande de communication vocale comprend en outre l'étape consistant à :
donner à un générateur de page Web l'instruction de générer un port d'accès de page Web pour l'appelé et la page Web d'informations relative à l'appelant pour un terminal d'appelé.

4. Procédé selon la revendication 2, dans lequel, suite à l'étape consistant à donner à l'appelé l'instruction d'accéder à la page Web d'informations relative à l'appelant en accord avec le port d'accès de page Web pour l'appelé et les informations d'adresse relatives à la page Web d'informations relative à l'appelant, l'étape consistant à établir une communication vocale entre l'appelant et l'appelé comprend en outre les étapes consistant à :
recevoir un message de réponse renvoyé par l'appelé après qu'il a accédé à la page Web d'informations relative à l'appelant;
établir un port d'accès de page Web pour l'appelant et générer une page Web d'informations relative à l'appelé;
obtenir le port d'accès de page Web pour l'appelant et générer des informations d'adresse relatives à la page Web d'informations relative à l'appelé ;
ajouter au message de réponse le port d'accès de page Web pour l'appelant et les informations d'adresse relatives à la page Web d'informations relative à l'appelé, envoyer le message de réponse à l'appelant, et donner à l'appelant l'instruction de recevoir le message de réponse envoyé par l'appelé et d'accéder à la page Web d'informations relative à l'appelé en accord avec le port d'accès de page Web pour l'appelant et les informations d'adresse relatives à la page Web d'informations relative à l'appelé.

5. Procédé selon la revendication 4, dans lequel l'étape consistant à établir un port d'accès de page Web pour l'appelant et générer une page Web d'informations relative à l'appelé comprend l'étape consistant à :
donner au générateur de page Web l'instruction de générer le port d'accès de page Web pour l'appelant et la page Web d'informations relative à l'appelé pour l'appelant.

6. Procédé selon la revendication 5, dans lequel, suite à l'étape consistant à donner à l'appelant l'instruction de recevoir le message de demande de réponse de communication vocale envoyé par l'appelé, l'étape consistant à établir une communication vocale entre l'appelant et l'appelé comprend en outre l'étape consistant à :
établir une connexion de communication vocale entre l'appelant et l'appelé.

7. Procédé selon la revendication 1, dans lequel le message de demande de communication vocale et le message de demande de poussée sont des messages SIP étendus, et le port d'accès de page Web et les informations d'adresse sont acheminés dans un message SIP.

8. Système pour coordonner la transmission de la voix et d'une page Web, comprenant une unité de commande d'appel, conçue pour établir une communication vocale entre un terminal d'appelant et un terminal d'appelé ; le système étant **caractérisé en ce que** l'unité de commande d'appel est en outre conçue pour :
recevoir un message de demande de poussée pour pousser une page Web depuis un terminal parmi le terminal d'appelant et le terminal d'appelé au cours de la conversion entre l'appelant et l'appelé ;
générer la page Web en accord avec le message de demande ;
obtenir un port d'accès de page Web pour l'autre terminal parmi le terminal d'appelant et le terminal d'appelé et générer des informations d'adresse relatives à la page Web ; et
envoyer le port d'accès de page Web et les informations d'adresse à l'autre terminal parmi le terminal d'appelant et le terminal d'appelé, et donner à l'autre terminal parmi le terminal d'appelant et le terminal d'appelé l'instruction d'accéder à la page Web en accord avec le port d'accès de page Web et les informations d'adresse.

9. Système selon la revendication 8, dans lequel l'unité de commande d'appel comprend :
une unité de réception, conçue pour recevoir un message de demande de communication vocale en provenance d'un appelant ;
un générateur de page Web, relié à l'unité de réception, et conçu pour établir un port d'accès de page Web pour un appelé et générer une page Web d'informations relative à l' appelant ; et
une unité d'envoi, reliée au générateur de page Web, et conçue pour obtenir le port d'accès de page Web pour l'appelé et des informations d'adresse relatives à la page Web d'informations relative à l'appelant générée par le générateur de page Web, et envoyer à l'appelé le port d'accès de page Web pour l'appelé et les informations d'adresse relatives à la page Web d'informations relative à l'appelant.

10. Système selon la revendication 9, dans lequel le générateur de page Web est en outre conçu pour recevoir un port d'accès de page Web pour l'appelé depuis un dispositif de communication autre qu'un appareil pour coordonner la transmission de la voix et d'une page Web, et pour générer les informations d'adresse relatives à la page Web d'informations relative à l'appelant.

11. Système selon la revendication 9, dans lequel
l'unité de réception est en outre conçue pour recevoir un message de réponse renvoyé par l'appelé après qu'il a accédé à la page Web d'informations relative à l' appelant ;
le générateur de page Web est en outre conçu pour établir un port d'accès de page Web pour l'appelant, générer une page Web d'informations relative à l'appelé en accord avec le message de réponse, et générer des informations d'adresse relatives à la page Web d'informations relative à l' appelé ; et
l'unité d'envoi est en outre conçue pour envoyer à l'appelant le port d'accès de page Web pour l'appelant et les informations d'adresse relatives à la page Web d'informations relative à l'appelé, et donner à l'appelant l'instruction d'accéder à la page Web d'informations relative à l'appelé en accord avec le port d'accès de page Web pour l'appelant et les informations d'adresse relatives à la page Web d'informations relative à l'appelé.

12. Système selon la revendication 11, dans lequel le message de réponse comprend un message de demande de réponse de communication vocale renvoyé à l'appelant par l'appelé en accord avec le message de demande de communication vocale envoyé par l'appelant,
le générateur de page Web est en outre conçu pour ajouter au message de réponse le port d'accès de page Web pour l'appelant et les informations d'adresse relatives à la page Web d'informations relative à l' appelé ; et
l'unité d'envoi est en outre conçue pour envoyer le message de réponse à l'appelant, et donner à l'appelant l'instruction de recevoir le message de demande de réponse de communication vocale envoyé par l'appelé.

13. Système selon la revendication 9, dans lequel l'unité de commande d'appel comprend en outre :
une unité de liaison de communication vocale, conçue pour établir une liaison de communication vocale entre l'appelant et l'appelé après que l'unité d'envoi a donné à l'appelant l'instruction de recevoir le message de demande de réponse de communication vocale.

14. Système selon la revendication 8, comprenant en outre :
un dispositif d'accès de communication vocale, conçu pour établir une connexion de communication vocale entre le terminal d'appelant et le terminal d'appelé.

15. Support d'enregistrement exploitable par ordinateur, comprenant des codes de programme d'ordinateur qui, lors de leur exécution par un processeur d'ordinateur, amènent le processeur d'ordinateur à exécuter les étapes selon l'une quelconque des revendications 1 à 7.
